(19) Europäisches Patentamt
European Patent Office
Office européen des brevets

(11) **EP 1 944 767 A2**

(12) **EUROPEAN PATENT APPLICATION**

(43) Date of publication:
**16.07.2008 Bulletin 2008/29**

(51) Int Cl.:
***G11B 20/10*** (2006.01)    ***G11B 5/09*** (2006.01)

(21) Application number: **07124117.8**

(22) Date of filing: **28.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **12.01.2007 JP 2007004566**

(71) Applicant: **FUJITSU LIMITED**
**Kawasaki-shi,**
**Kanagawa 211-8588 (JP)**

(72) Inventors:
• **Itakura, Akihiro**
 **Nakahara-ku**
 **Kawasaki-shi, Kanagawa 211-8588 (JP)**
• **Kanaoka, Toshikazu**
 **Nakahara-ku**
 **Kawasaki-shi, Kanagawa 211-8588 (JP)**

(74) Representative: **Stebbing, Timothy Charles**
**Haseltine Lake**
**Lincoln House**
**300 High Holborn**
**London WC1V 7JH (GB)**

(54) **Inspection method for perpendicular magnetic recording medium and inspection device thereof**

(57) A device inspects the performance of a perpendicular magnetic recording medium by separating the medium noise component of a perpendicular magnetic recording medium to decrease the error rate by accurately separating and detecting the medium noise component. Using correlation matrices, jitter noise and T50 noise which depend on the transition point of magnetization, and DC noise which is added to a DC component are separated and detected from the medium noise component of a perpendicular magnetic recording medium acquired from the reproducing waveform of a magnetic head. By adding a base matrix of the DC noise component to a linear separation expression for detecting the noise power from the medium noise component, the DC noise is detected using the least square method, separately from the other medium noise, which depends on the fluctuation of magnetization transition points.

FIG. 4

**Description**

This application is based upon and claims the benefit of priority from the prior Japanese Patent Application No. 2007-4566, filed on January 12, 2007.

The present invention relates to an inspection method for a perpendicular magnetic recording medium, used for inspecting (analyzing) medium noise which influences reproducing characteristics of a perpendicular magnetic recording medium, and an inspection device thereof, and more particularly to an inspection method for a perpendicular magnetic recording medium, used for separating medium noise components at high precision, and an inspection device thereof.

Magnetic storage devices using magnetic storage media, such as magnetic disks, are widely used. For magnetic storage devices, a large capacity, without increasing the device size, is demanded.

For magnetic storage devices, a horizontal recording (or in-plane recording) method, which records the magnetic domain in a horizontal direction on a magnetic storage medium, is widely used.

A perpendicular recording method, on the other hand, records the magnetic domain in a direction perpendicular to the plane, and an improvement in storage density is expected. To perform perpendicular recording, a perpendicular recording medium, which is different from a horizontal recording medium, is used. Therefore just like the case of horizontal recording media, analyzing media noise, which influences the S/N radio of reproducing signals, and evaluating or inspecting the media, are also required for perpendicular recording media.

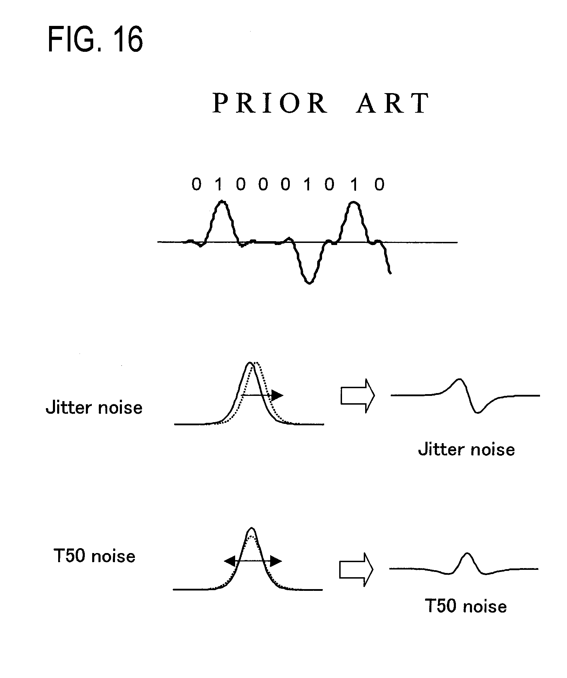

Fig. 16 shows medium noise of the in-plane recording method. In the in-plane recording, the reproducing waveform shows a signal level according to the "1" and "0" of data. Among the medium noises of a reproducing waveform, jitter noise and T50 noise are known as types of noise that influence the S/N ratio. Jitter noise refers to jitter which appears in a reproducing waveform due to the fluctuation of the transition point of the reproducing waveform from an ideal transition point. T50 noise appears as a noise that is due to the fluctuation of the transition width of the reproducing waveform from an ideal width. In both cases, fluctuation occurs due to the characteristics of the magnetic storage media.

With the foregoing in view, methods for inspecting jitter noise and T50 noise and evaluating the error rate have been proposed for the evaluation or inspection of perpendicular magnetic recording media (e.g. "Medium noise mode analysis in perpendicular magnetic recording method", Ken Nakagawa and three others, Technical Report of IEICE, MR 2002-61, Dec. 2002, issued by IEICE).

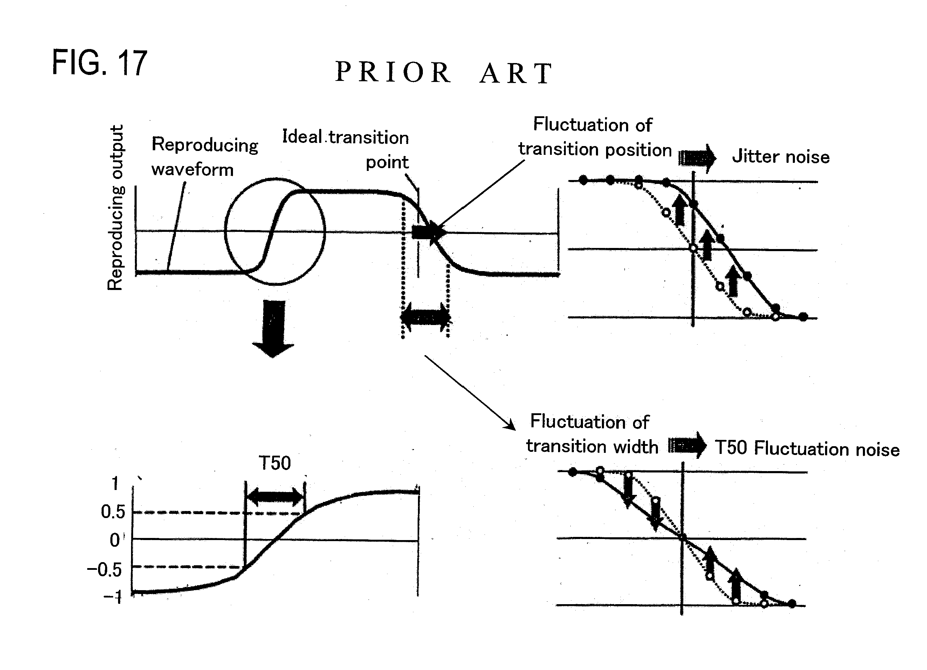

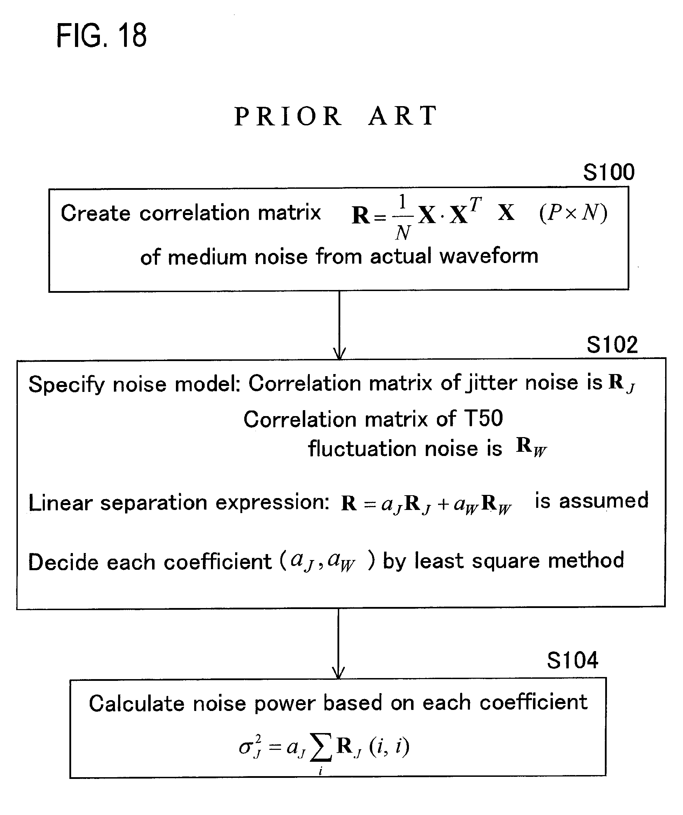

Fig. 17 is a diagram depicting medium noise in a conventional perpendicular recording medium, and Fig. 18 shows the flow of the conventional medium noise measurement processing in Fig. 17.

As Fig. 17 shows, in the perpendicular recording, the reproducing waveform, as reproducing output, changes the level at a data change point. Therefore just like the case of horizontal recording, jitter noise and T50 noise influence the S/N ratio. Jitter noise is the fluctuation of the transition point of the reproducing waveform from the ideal transition point, and T50 noise is the fluctuation of the transition width, which is a width that is $\pm$50% the level of the reproducing waveform.

As Fig. 18 shows, in order to measure jitter noise and T50 noise, it is proposed that a correlation matrix is created and the noise power thereof is measured by the least square method, as mentioned above. In other words, as Fig. 18 shows, a correlation matrix R of medium noise is created from the actual waveform when data of a perpendicular recording medium is read (S100). Then a noise model is specified using correlation matrices Rj and Rw of jitter noise and T50 noise, a linear separation expression R is assumed, and each coefficient of each correlation matrix is calculated from the correlation matrix R of the medium noise and the linear separation expression R acquired in S100, using a least square method (S102). Then using the coefficients, the noise power of each type of noise is calculated (S104).

By this means, the noise power of jitter noise and T50 noise of a perpendicular recording medium is measured, and the magnetic particles and layer thickness, for example, of the perpendicular recording medium are analyzed.

In the prior art, the medium noise is evaluated, and the perpendicular recording medium is evaluated and inspected by measuring the position of the change point of the reproducing waveform and the inclination of the perpendicular recording medium.

In the case of the perpendicular magnetic recording method, however, the reproducing signal has DC components, so it is difficult to evaluate noise caused by the fluctuation of the DC components depending on the characteristics of the perpendicular recording medium if a conventional way of evaluating the medium noise, based on the measurement of the position of the change point of the reproducing waveform and inclination of the perpendicular recording medium, is used.

In other words, in the case of the perpendicular magnetic recording method, it has been known that medium noise is added to the DC components of a reproducing signal, but it has not been studied to what degree the DC noise, added to DC components, influences the error rate. This is because separating DC noise at high precision for evaluation and inspection of medium noise is difficult.

With the foregoing in view, an embodiment of the present invention may provide an inspection method (analysis method) for a perpendicular magnetic recording medium for separating and detecting noise added to the DC components of a reproducing signal of a perpendicular magnetic recording medium, and an inspection device thereof.

An embodiment of the present invention may also provide an inspection method for a perpendicular magnetic recording medium for separating and detecting transition noise and noise added to the DC components from the reproducing signal of a perpendicular magnetic recording medium, and an inspection device thereof.

An embodiment of the present invention may further provide an inspection method for a perpendicular recording medium for separating and detecting transition noise and noise added to the DC components from the reproducing signal of a perpendicular magnetic recording medium, and also detecting asymmetrical noise, and an inspection device thereof.

An inspection method for a perpendicular magnetic recording medium for inspecting (measuring or testing) medium noise of a perpendicular magnetic recording medium, according to the present invention, has: a step of reading recording data from the perpendicular magnetic recording medium by a magnetic head and acquiring a reproducing waveform; a step of extracting a medium noise component from the reproducing waveform and creating a correlation matrix of the medium noise by a computer; a step of calculating respective coefficients of a correlation matrix on a magnetization transition noise component and a correlation matrix on a DC noise component, using the least square method, based on a noise correlation matrix specified by a linear sum of the correlation matrix on the magnetization transition noise and the correlation matrix on the DC noise, and the extracted medium noise correlation matrix by the computer; and a step of calculating a power of the magnetization transition noise component and a power of the DC noise component using the respective coefficients by the computer.

An inspection device (noise analysis system) of the present invention, for analyzing medium noise of a perpendicular magnetic recording medium, comprises: a magnetic head, which reads recording data from the perpendicular magnetic recording medium and acquires a reproducing waveform; and a computer, which extracts a medium noise component from the reproducing waveform and calculates a component of the medium noise. The computer is configured to create a correlation matrix of the medium noise from the extracted medium noise; calculate respective coefficients of a correlation matrix on magnetization transition noise and a correlation matrix on DC noise, using a least square method, based on a noise correlation matrix specified by a linear sum of the correlation matrix on the magnetization transition noise and the correlation matrix on the DC noise, and the extracted medium noise correlation matrix; and to calculate a power of the magnetization transition noise component and a power of the DC noise component using the respective coefficients.

In the present invention, it is preferable that the coefficient calculation step has a step of calculating the respective coefficients of each polarity of the correlation matrix on the magnetization transition noise and the correlation matrix on the DC noise, using a least square method, based on the noise correlation matrix specified by the linear sum of the correlation matrix on the magnetization transition noise of each polarity of the perpendicular magnetic recording and the correlation matrix on the DC noise of the each polarity, and the extracted medium noise correlation matrix.

In the present invention, it is preferable that the coefficient calculation step further has: a step of performing partial differentiation calculation for a square expression of a difference between the noise correlation matrix specified by the linear sum of the correlation matrix on the magnetization transition noise and the correlation matrix on the DC noise, and the extracted medium noise correlation matrix, with the coefficient of the correlation matrix on the magnetization transition noise and the coefficient of the correlation matrix on the DC noise respectively; and a step of calculating the coefficient of the correlation matrix on the magnetization transition noise and the coefficient of the correlation matrix on the DC noise using an equation acquired in the partial differentiation calculation.

In the present invention, it is preferable that the coefficient calculation step further has a step of calculating respective coefficients of the correlation matrix on the magnetization transition noise and the correlation matrix on the DC noise, using a least square method, based on a noise correlation matrix specified by a linear sum of a base matrix on the magnetization transition noise and a base matrix on the DC noise, and the extracted medium noise correlation matrix.

In the present invention, it is preferable that the power calculation step has a step of calculating a power of the magnetization transition noise component and a power of the DC noise component respectively using the coefficient of the correlation matrix on the magnetization transition noise, the coefficient of the correlation matrix on the DC noise, and a diagonal element of the base matrix.

It is preferable that the present invention further has a step of outputting the calculated power of the noise component to a visual device, as a diagonal element of the base matrix on orthogonal coordinates.

In the present invention, it is preferable that the correlation matrix on the magnetization transition noise has a correlation matrix of jitter noise on the fluctuation of the magnetization transition point and a correlation matrix of the T50 noise on the fluctuation of the inclination of the magnetization transition point.

In the present invention, it is preferable that the step of creating a correlation matrix of the medium noise has a step of calculating an average waveform of the reproducing waveforms of a plurality of blocks; and a step of creating a correlation matrix of the medium noise by subtracting the average waveform from the reproducing waveform and extracting the medium noise component.

In the present invention, it is preferable that the step of acquiring a reproducing waveform has a step of writing recording data of a plurality of blocks to the perpendicular magnetic recording medium by the magnetic head, and a step of reading the recording data from the perpendicular magnetic recording medium by the magnetic head after the writing, and acquiring a reproducing waveform.

In the present invention, it is preferable that the step of acquiring a reproducing waveform further has a step of reading the recording data from the rotating perpendicular magnetic recording medium by the magnetic head, and acquiring a reproducing waveform.

Not only jitter noise, which depends on the transition point of magnetization and T50 noise, but also DC noise, which is added to the DC component, occurring due to the fact that the reproducing waveform of the perpendicular magnetic recording method is a rectangular wave, can be separated from the medium noise of a perpendicular magnetic recording medium by correlation matrices, and noise power thereof can be detected, therefore performance of the perpendicular magnetic recording medium can be accurately evaluated. Hence the present invention can contribute to decreasing the error rate of perpendicular magnetic recording media.

Reference is made, by way of example only, to the accompanying drawings in which:

Fig. 1 is a block diagram depicting an embodiment of an inspection device for a perpendicular magnetic recording medium of the present invention;
Fig. 2 is a cross-sectional view depicting the perpendicular magnetic recording medium in Fig. 1;
Fig. 3 is a diagram depicting a perpendicular recording status of the perpendicular magnetic recording medium in Fig. 1;
Fig. 4 is a diagram depicting a perpendicular recording method for the perpendicular magnetic recording medium in Fig. 1;
Fig. 5 is a flow chart depicting the medium noise analysis processing in Fig. 1;
Fig. 6 is a diagram depicting the medium noise analysis processing in Fig. 5;
Fig. 7 is a flow chart depicting the coefficient calculation processing in Fig. 5;
Fig. 8 is a graph depicting a simulation result on error rate based on the magnetization transition noise and DC noise of the present invention;
Fig. 9 is a diagram depicting a visualization processing of the jitter noise of the present invention;
Fig. 10 is a diagram depicting a visualization processing of the T50 noise of the present invention;
Fig. 11 is a diagram depicting a visualization processing of the DC noise of the present invention;
Fig. 12 is a diagram depicting a visualization processing of the sampling noise of the present invention;
Fig. 13 is a diagram depicting another visualization processing of the jitter noise of the present invention;
Fig. 14 is a diagram depicting another visualization processing of the T50 noise of the present invention;
Fig. 15 is a diagram depicting another visualization processing of the DC noise of the present invention;
Fig. 16 is a diagram depicting a conventional in-plane recording method;
Fig. 17 is a diagram depicting a medium noise of a conventional perpendicular magnetic recording method; and
Fig. 18 is a flow chart depicting a conventional medium noise detection processing of a perpendicular magnetic recording medium.

Embodiments of the present invention will now be described in the sequence of medium noise inspection device for a perpendicular recording medium, medium noise inspection processing, visualization processing for medium noise base matrix, and other embodiments, but the present invention is not limited to these embodiments.

Medium noise inspection device for a perpendicular recording medium

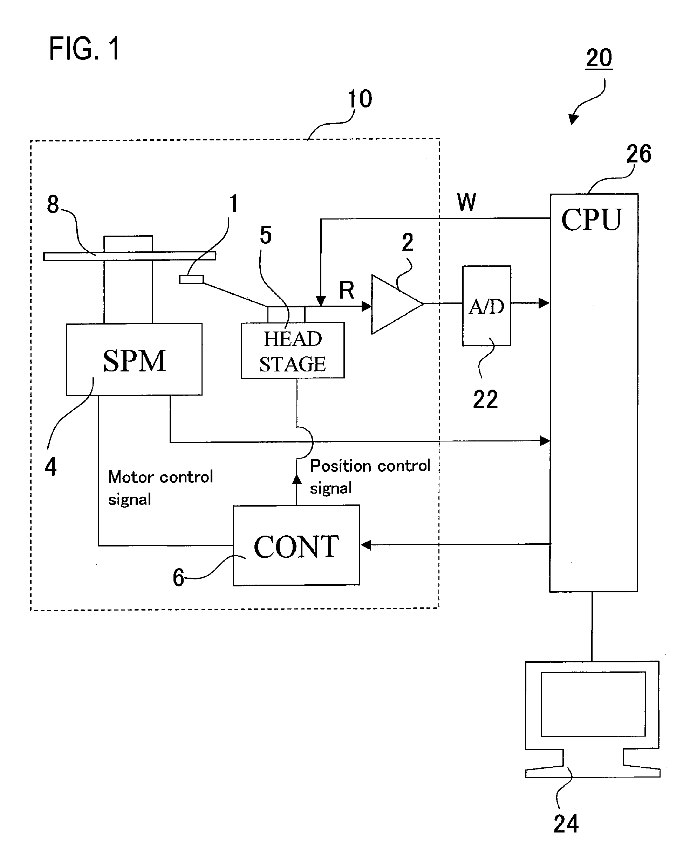

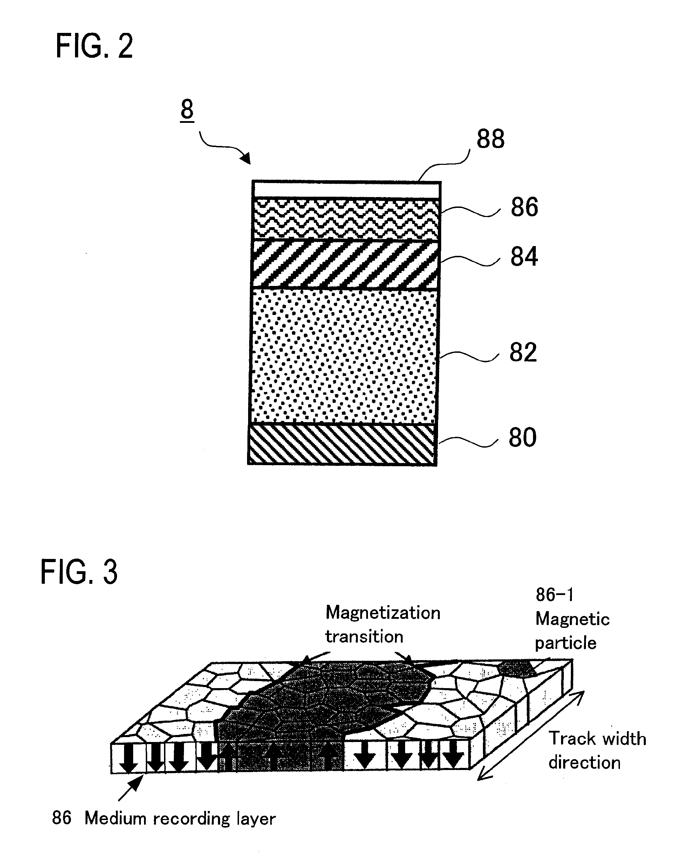

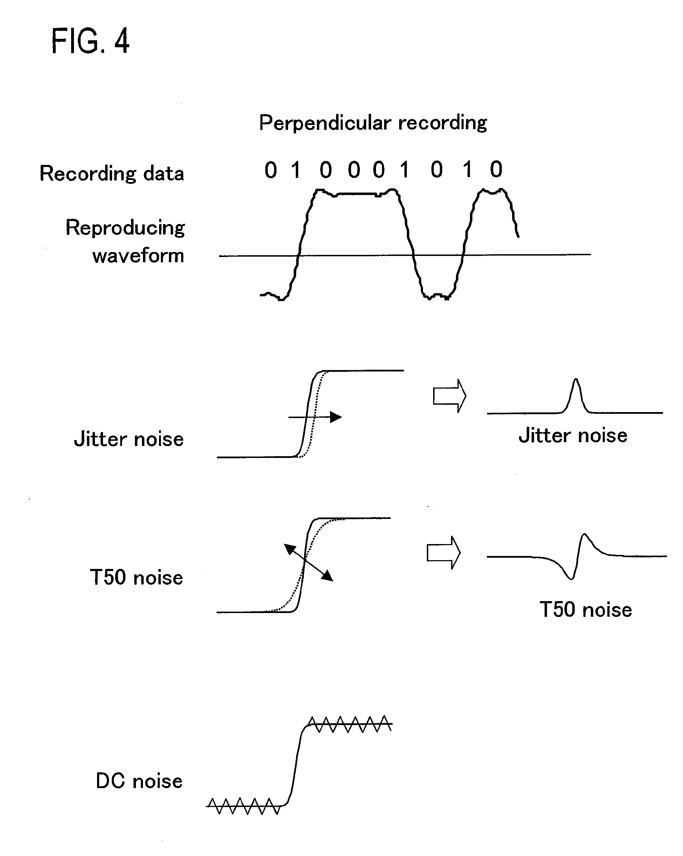

Fig. 1 is a block diagram depicting an embodiment of the medium noise inspection device of the present invention, Fig. 2 is a cross-sectional view depicting the perpendicular magnetic recording medium in Fig. 1, Fig. 3 is a diagram depicting the recording status of the perpendicular magnetic recording in Fig. 1, and Fig. 4 is a diagram depicting a reproducing waveform of the perpendicular magnetic recording medium and the medium noise, where a perpendicular magnetic disk is shown as the perpendicular magnetic recording medium.

As Fig. 1 shows, the inspection device has a spin stand 10 and a data processing unit 20. The spin stand 10 further has a magnetic head (perpendicular magnetic recording/reproducing head) 1, a perpendicular magnetic recording medium (perpendicular magnetic recording disk) 8, a spindle motor 4, which rotates the perpendicular magnetic recording medium 8, a head stage 5, which moves the magnetic head 1 in a radius direction of the perpendicular recording medium 8, an amplifier 2, which amplifies a read signal of the magnetic head 1, and a control circuit 6, which controls the spindle motor 4 and the head stage 5.

The data processing unit 20, on the other hand, has an analog/digital converter (A/D converter) 22, which converts a read signal (analog signal) of the magnetic head 1, sent via the amplifier 2, into a digital value, a computer (CPU) 26, which sends a write data for measurement to the magnetic head 1 and analyzes and processes a medium noise component using the read signal from the magnetic head 1 via the amplifier 2 (received via the amplifier 2 and the A/D converter 22) as a measurement waveform, and a display device 24, which displays the analysis result from the CPU 26.

The perpendicular magnetic recording medium 8, to be evaluated and analyzed, is set in the spindle motor 4. As Fig. 2 shows, in the cross-sectional structure, the perpendicular magnetic recording medium 8 comprises a backing layer 82, an intermediate layer 84, a recording layer 86, and a protective layer 88, which are sequentially stacked on a substrate 80 formed of glass or aluminum. The backing layer 82 is a soft magnetic layer, and the intermediate layer is normally a non-magnetic layer.

As Fig. 3 shows, in the perpendicular magnetic recording method, magnetization is formed in the recording layer 86 in the perpendicular direction to record data. Hence in order to improve recording density, it is important that an individual magnetic particle 86-1, forming the recording layer 86, is individually isolated.

Particularly it is said that the magnetization transition point of the medium noise is influenced by the degree of isolation of the magnetic particle 86-1. As Fig. 4 shows, in the case of the perpendicular magnetic recording method, data "1" and "0" are recorded in the magnetization direction, which is the film thickness direction, so the reproducing waveform changes at a magnetization transition point where the direction of magnetization changes, that is, the reproducing waveform forms a rectangular waveform.

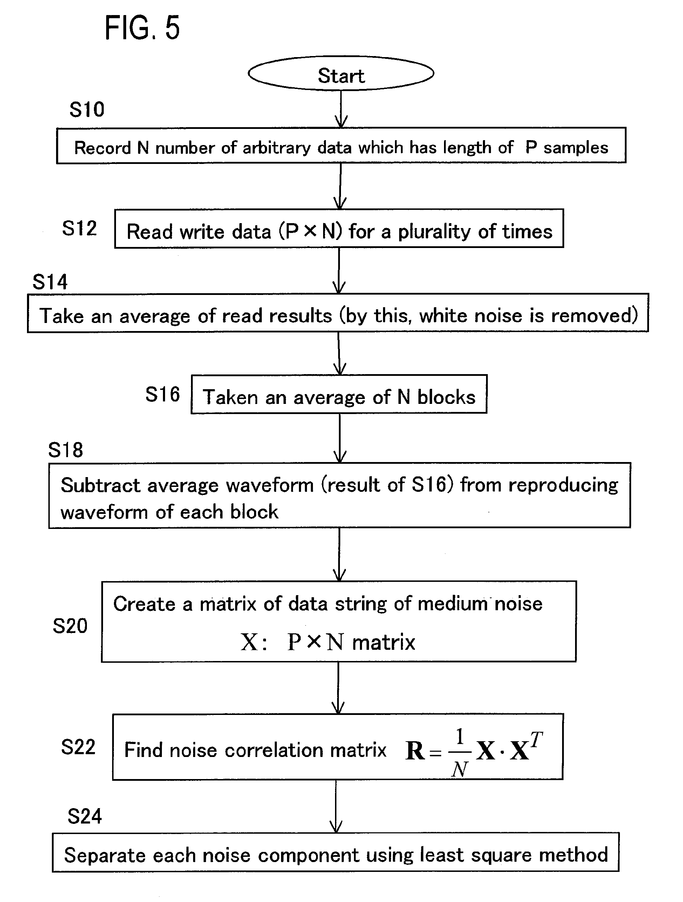

This means that there are three types of medium noise: jitter noise which depends on the transition point of magnetization, T50 noise, and DC noise. Since the reproducing waveform of the perpendicular magnetic recording method is a rectangular wave, there are many DC components, and noise is added to these DC components. This is called "DC (Direct Current) noise". This DC noise also influences the S/N ratio and causes deterioration of the error rate, so the DC noise must be separated and analyzed as well. Therefore the CPU 26 in Fig. 1 separates the jitter noise, T50 noise, and DC noise individually from the measured waveform by an analysis processing, which is described in Fig. 5 and later, and calculates the respective noise power. Medium noise inspection (analysis) processing

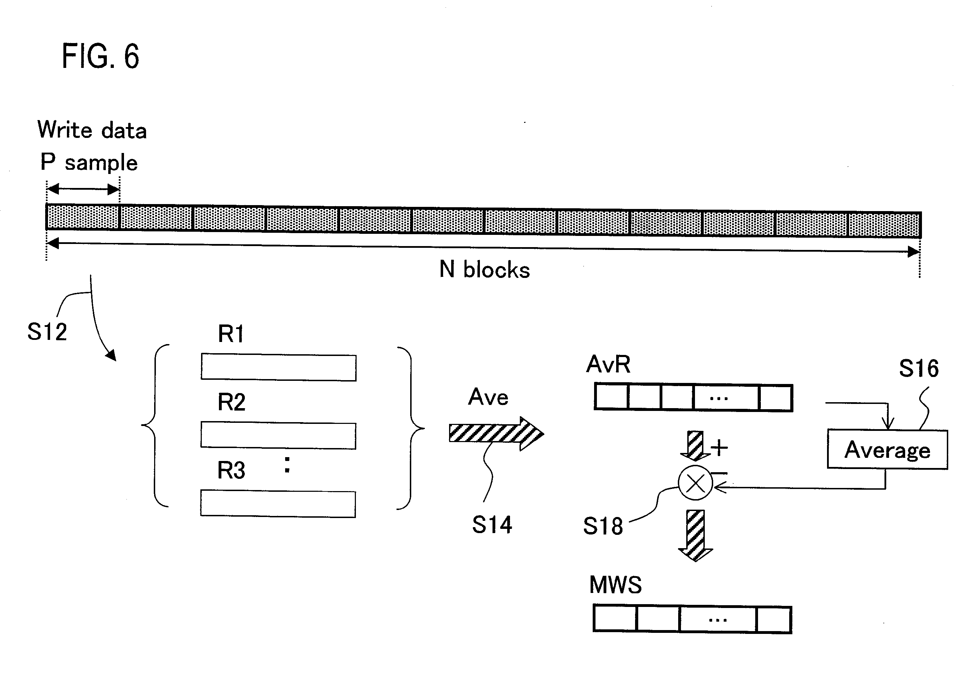

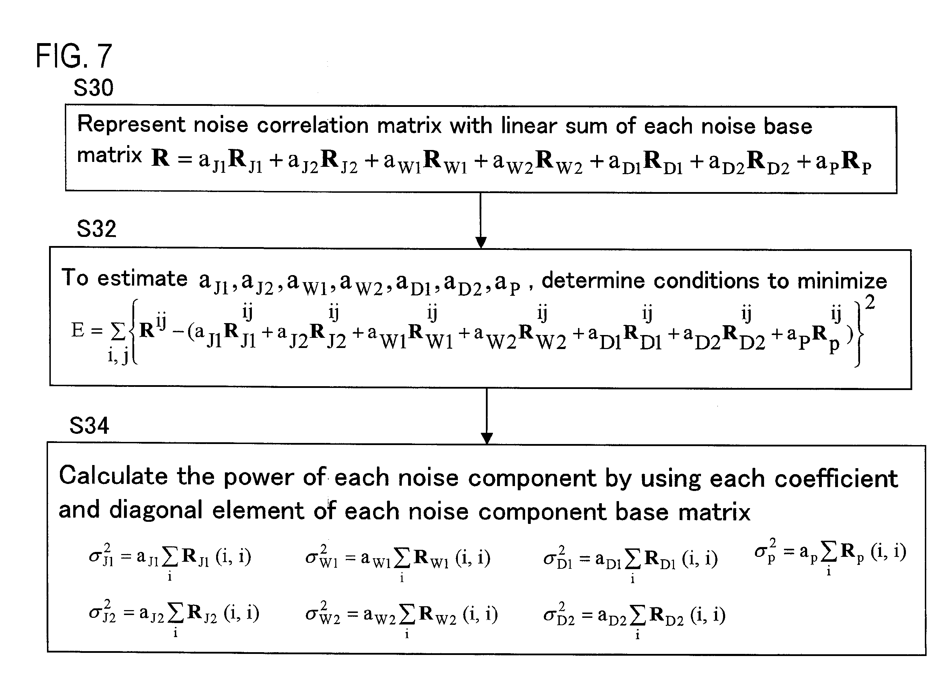

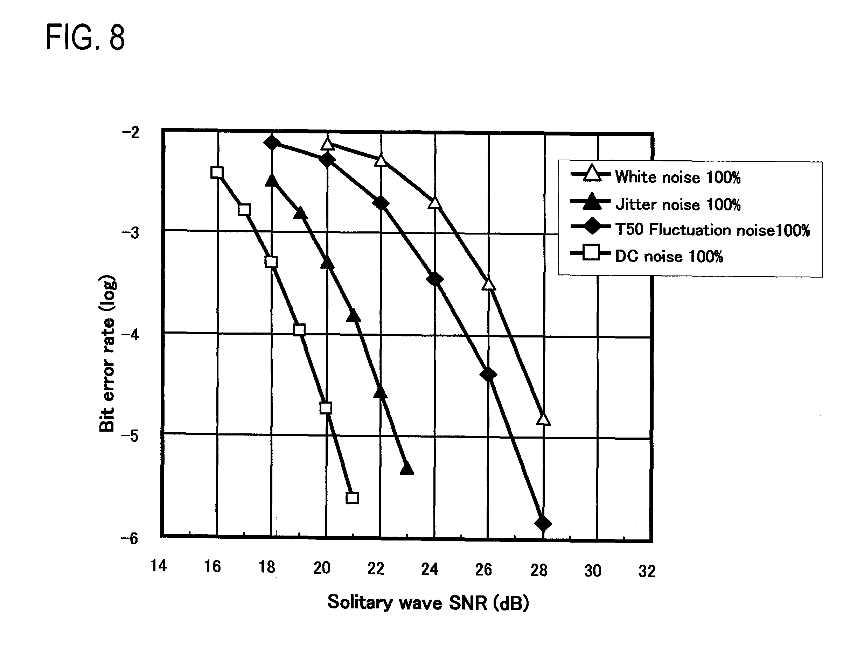

Fig. 5 is a flow chart depicting the medium noise analysis processing, which is executed by the CPU in Fig. 1, Fig. 6 is a diagram depicting the analysis processing in Fig. 5, Fig. 7 is a flow chart depicting the noise power separation processing in Fig. 5, and Fig. 8 is a characteristic diagram of the bit error rate of each medium noise in solitary waves.

The processing in Fig. 5 will be described referring to Fig. 6.

(S10) The CPU 20 provides N number (for N blocks, N > 1) of arbitrary data which has the length of P samples (P > 1) to the magnetic head 1 as a measurement data, as shown in Fig. 6, and the magnetic head 1 records this measurement pattern in the magnetic disk (perpendicular recording disk) 8.

(S12) The CPU 20 instructs the magnetic head 1 to read the measurement data (P x N) recorded in the magnetic disk 2 for a plurality of times (e.g. three times). By this, the CPU 20 acquires a plurality (three in this case) of measured waveforms R1, R2 and R3 from the magnetic head 1 via the amplifier 2 and the A/D converter 22.

(S14) The CPU 20 takes an average of the amplitudes of the plurality (three in this case) of measured waveforms R1, R2 and R3, and calculates one averaged read waveform (P x N) AvR. By this averaging, the white noise, included in the reproducing signal, is removed.

(S16) Then the CPU 20 calculates the average waveform of the amplitudes of the N blocks of the averaged read waveform AvR. It is assumed that each block records the same waveform (data).

(S18) The CPU 20 subtracts the average waveform of each block calculated in step S16 from the reproducing waveform of each block of the averaged read waveform AvR. By this, a signal waveform Mws (P x N blocks), including only medium noise, is acquired.

(S20) The CPU 20 creates a matrix of the data string of the signal waveform Mws, including only the medium noise. In other words, the CPU 20 converts the signal waveform Mws into matrix X (P x N).

(S22) Then the CPU 20 finds the noise correction matrix R. In other words, the CPU 20 specifies the noise models (jitter noise, T50 noise, DC noise), so as to separate each noise component from the measured noise matrices, and assumes a linear separation expression R to separate each noise component. Here R has a correspondence of Expression (1), with the matrix X acquired from the measured waveform.

[Expression 1]

$$\mathbf{R} = \frac{1}{N}\mathbf{X}\cdot\mathbf{X}^{T} \qquad (1)$$

Here $X^T$ of Expression (1) is transposed X.

(S24) Each noise component is separated from the noise correlation matrix R by the least square method. This processing is described in detail referring to Fig. 7.

(S30) As Fig. 7 shows, the noise correlation matrix R for separating the noise is represented by a linear sum of base matrices of each noise (jitter noise, T50 noise, DC noise and sampling noise in this case). Here it is assumed that the base matrices of jitter noise are Rj1, Rj2, the basic matrices of T50 noise are Rw1 and Rw2, the base matrices of DC noise are RD1 and RD2, and the base matrix of sampling noise is Rp. When the coefficients of each base matrix are aj1, aj2, aw1, aw2, aD1, aD2 and ap, then the noise correlation matrix R is given by the following Expression (2).

[Expression 2]

$$\mathbf{R} = a_{J1}\mathbf{R}_{J1} + a_{J2}\mathbf{R}_{J2} + a_{W1}\mathbf{R}_{W1} + a_{W2}\mathbf{R}_{W2} + a_{D1}\mathbf{R}_{D1} + a_{D2}\mathbf{R}_{D2} + a_{P}\mathbf{R}_{P} \quad (2)$$

As Expression (2) shows, in the present embodiment, two base matrices (e.g. Rj1 and Rj2) are specified for one noise component (e.g. jitter noise). As described later, the two base matrices correspond to the transition directions at a transition point. This is the same for T50 noise and DC noise. Hence the respective noises in each transition direction and recording direction can be separated.

(S32) Then coefficients aj1, aj2, aw1, aw2, aD1, aD2 and ap of each base matrix are estimated. For this estimation, the least square method is used. In other words, if the (i, j) component of the matrix R (measured value) of Expression (1) is $R^{i,j}$, then the sum of the square of the result when Expression (2) is subtracted from $R^{i,j}$ is an error E, that is, the error expression in Expression (3) is used.

[Expression 3]

$$E = \sum_{i,j}\left\{\mathbf{R}^{ij} - (a_{J1}\mathbf{R}^{ij}_{J1} + a_{J2}\mathbf{R}^{ij}_{J2} + a_{W1}\mathbf{R}^{ij}_{W1} + a_{W2}\mathbf{R}^{ij}_{W2} + a_{D1}\mathbf{R}^{ij}_{D1} + a_{D2}\mathbf{R}^{ij}_{D2} + a_{P}\mathbf{R}^{ij}_{p})\right\}^{2} \quad (3)$$

A condition when the result of Expression (3) becomes the least is calculated. Specifically, E of Expression (3) is partially differentiated by each coefficient aj1, aj2, aw1, aw2, aD1, aD2 and ap, and equations of which partial differentiation value is "0" are calculated as shown in the following Expression (4).

[Expression 4]

$$\left.\begin{array}{ccccccc} \dfrac{\partial E}{\partial a_{J1}} = 0 & , & \dfrac{\partial E}{\partial a_{J2}} = 0 & , & \dfrac{\partial E}{\partial a_{W1}} = 0 & , & \dfrac{\partial E}{\partial a_{W2}} = 0 \\[3mm] & \dfrac{\partial E}{\partial a_{D1}} = 0 & , & \dfrac{\partial E}{\partial a_{D2}} = 0 & , & \dfrac{\partial E}{\partial a_{p}} = 0 \end{array}\right\} \quad (4)$$

In other words, the partial differential equation with coefficient aj1 is given by the following Expression (5).

[Expression 5]

$$\left.\begin{array}{l} \dfrac{\partial E}{\partial a_{J1}} = a_{J1}\sum_{i,j}\left(\mathbf{R}^{ij}_{J1}\right)^{2} + a_{J2}\sum_{i,j}\left(\mathbf{R}^{ij}_{J1}\mathbf{R}^{ij}_{J2}\right) + a_{W1}\sum_{i,j}\left(\mathbf{R}^{ij}_{J1}\mathbf{R}^{ij}_{W1}\right) + a_{W2}\sum_{i,j}\left(\mathbf{R}^{ij}_{J1}\mathbf{R}^{ij}_{W2}\right) \\[3mm] + a_{D1}\sum_{i,j}\left(\mathbf{R}^{ij}_{J1}\mathbf{R}^{ij}_{D1}\right) + a_{D2}\sum_{i,j}\left(\mathbf{R}^{ij}_{J1}\mathbf{R}^{ij}_{D2}\right) + a_{P}\sum_{i,j}\left(\mathbf{R}^{ij}_{J1}\mathbf{R}^{ij}_{p}\right) - \sum_{i,j}\left(\mathbf{R}^{ij}_{J1}\mathbf{R}^{ij}\right) = 0 \end{array}\right\} (5)$$

The partial differential equation with coefficient aj2 is given by the following Expression (6).

[Expression 6]

$$\frac{\partial E}{\partial a_{J2}} = a_{J1}\sum_{i,j}\left(\mathbf{R}_{J1}^{ij}\mathbf{R}_{J2}^{ij}\right)+a_{J2}\sum_{i,j}\left(\mathbf{R}_{J2}^{ij}\right)^2+a_{W1}\sum_{i,j}\left(\mathbf{R}_{J2}^{ij}\mathbf{R}_{W1}^{ij}\right)+a_{W2}\sum_{i,j}\left(\mathbf{R}_{J2}^{ij}\mathbf{R}_{W2}^{ij}\right) \\ +a_{D1}\sum_{i,j}\left(\mathbf{R}_{J2}^{ij}\mathbf{R}_{D1}^{ij}\right)+a_{D2}\sum_{i,j}\left(\mathbf{R}_{J2}^{ij}\mathbf{R}_{D2}^{ij}\right)+a_{P}\sum_{i,j}\left(\mathbf{R}_{J2}^{ij}\mathbf{R}_{p}^{ij}\right)-\sum_{i,j}\left(\mathbf{R}_{J2}^{ij}\mathbf{R}^{ij}\right)=0 \tag{6}$$

The partial differential equation with coefficient aw1 is given by the following Expression (7).

[Expression 7]

$$\frac{\partial E}{\partial a_{W1}} = a_{J1}\sum_{i,j}\left(\mathbf{R}_{W1}^{ij}\mathbf{R}_{J1}^{ij}\right)+a_{J2}\sum_{i,j}W\left(\mathbf{R}_{W1}^{ij}\mathbf{R}_{J2}^{ij}\right)+a_{W1}\sum_{i,j}\left(\mathbf{R}_{W1}^{ij}\right)^2+a_{W2}\sum_{i,j}\left(\mathbf{R}_{W1}^{ij}\mathbf{R}_{W2}^{ij}\right) \\ +a_{D1}\sum_{i,j}\left(\mathbf{R}_{W1}^{ij}\mathbf{R}_{D1}^{ij}\right)+a_{D2}\sum_{i,j}\left(\mathbf{R}_{W1}^{ij}\mathbf{R}_{D2}^{ij}\right)+a_{P}\sum_{i,j}\left(\mathbf{R}_{W1}^{ij}\mathbf{R}_{p}^{ij}\right)-\sum_{i,j}\left(\mathbf{R}_{W1}^{ij}\mathbf{R}^{ij}\right)=0 \tag{7}$$

The partial differential equation with coefficient aw2 is given by the following Expression (8).

$$+a_{D1}\sum_{i,j}\left(\mathbf{R}_{W2}^{ij}\mathbf{R}_{D1}^{ij}\right)+a_{D2}\sum_{i,j}\left(\mathbf{R}_{W2}^{ij}\mathbf{R}_{D2}^{ij}\right)+a_{P}\sum_{i,j}\left(\mathbf{R}_{W2}^{ij}\mathbf{R}_{p}^{ij}\right)-\sum_{i,j}\left(\mathbf{R}_{W2}^{ij}\mathbf{R}^{ij}\right)=0$$

The partial differential equation with coefficient aD1 is given by the following Expression (9).

Expression 9]

The partial differential equation with coefficient aD1 is given by the following Expression (9).

$$+a_{D1}\sum_{i,j}\left(\mathbf{R}_{D1}\right)+a_{D2}\sum_{i,j}\left(\mathbf{R}_{D1}\mathbf{R}_{D2}\right)+a_{P}\sum_{i,j}\left(\mathbf{R}_{D1}\mathbf{R}_{p}\right)-\sum_{i,j}\left(\mathbf{R}_{D1}\mathbf{R}^{ij}\right)=0$$

The partial differential equation with coefficient aD2 is given by the following Expression (10).

The partial differential equation with coefficient aD2 is given by the following Expression (10).

$$\frac{\partial}{\partial a_{D2}} = a_{J1}\sum_{i,j}\left(\mathbf{R}_{D2}\mathbf{R}_{J1}\right)+a_{J2}\sum_{i,j}\left(\mathbf{R}_{D2}\mathbf{R}_{J2}\right)+a_{W1}\sum_{i,j}\left(\mathbf{R}_{D2}\mathbf{R}_{W1}\right)+a_{W2}\sum_{i,j}\left(\mathbf{R}_{D2}\mathbf{R}_{W2}\right) \\ +a_{D1}\sum_{i,j}\left(\mathbf{R}_{D2}^{ij}\mathbf{R}_{D1}^{ij}\right)+a_{D2}\sum_{i,j}\left(\mathbf{R}_{D2}^{ij}\right)^2+a_{P}\sum_{i,j}\left(\mathbf{R}_{D2}^{ij}\mathbf{R}_{p}^{ij}\right)-\sum_{i,j}\left(\mathbf{R}_{D2}^{ij}\mathbf{R}^{ij}\right)=0 \tag{10}$$

The partial differential equation with coefficient ap is given by the following Expression (11).

[Expression 11]

$$\frac{\partial E}{\partial a_p} = a_{J1}\sum_{i,j}\left(\mathbf{R}_p^{ij}\mathbf{R}_{J2}^{ij}\right) + a_{J2}\sum_{i,j}\left(\mathbf{R}_p^{ij}\mathbf{R}_{J2}^{ij}\right) + a_{W1}\sum_{i,j}\left(\mathbf{R}_p^{ij}\mathbf{R}_{W1}^{ij}\right) + a_{W2}\sum_{i,j}\left(\mathbf{R}_p^{ij}\mathbf{R}_{W2}^{ij}\right)$$
$$+ a_{D1}\sum_{i,j}\left(\mathbf{R}_p^{ij}\mathbf{R}_{D1}^{ij}\right) + a_{D2}\sum_{i,j}\left(\mathbf{R}_p^{ij}\mathbf{R}_{D2}^{ij}\right) + a_P\sum_{i,j}\left(\mathbf{R}_{J2}^{ij}\right)^2 - \sum_{i,j}\left(\mathbf{R}_p^{ij}\mathbf{R}^{ij}\right) = 0 \qquad (11)$$

The seven equations, from Expression (5) to Expression (11), are regarded as simultaneous equations, and are solved to find the coefficients aj1, aj2, aw1, aw2, aD1, aD2 and ap. By this, the coefficients aj1, aj2, aw1, aw2, aD1, aD2 and ap are calculated.

(S34) Using the calculated coefficients aj1, aj2, aw1, aw2, aD1, aD2 and ap, and the diagonal element R (i, i) of the base matrix of each noise component, the power of each noise component is calculated. In other words, the power σj1 and σj2 of the jitter noise component are calculated by the following Expression (12).

the following Expressi<

[Expression 12]

$$\sigma_{J1}^2 = a_{J1}\sum_i \mathbf{R}_{J1}(i, i)$$
$$\sigma_{J2}^2 = a_{J2}\sum_i \mathbf{R}_{J2}(i, i) \qquad (12)$$

In the same way, the power σw1 and σw2 of the T50 noise component are calculated by the following Expression (13).

[Expression 13]

$$\sigma_{W1}^2 = a_{W1}\sum_i \mathbf{R}_{W1}(i, i)$$
$$\sigma_{W2}^2 = a_{W2}\sum_i \mathbf{R}_{W2}(i, i) \qquad (13)$$

The power σD1 and σD2 of the DC noise component are calculated by the following Expression (14).

[Expression 14]

$$\sigma_{D1}^2 = a_{D1}\sum_i \mathbf{R}_{D1}(i, i)$$
$$\sigma_{D2}^2 = a_{D2}\sum_i \mathbf{R}_{D2}(i, i) \qquad (14)$$

The power σp of the sampling noise component is calculated by the following Expression (15).

[Expression 15]

$$\sigma_p^2 = a_p\sum_i \mathbf{R}_p(i, i) \qquad (15)$$

In this way, the correlation matrix corresponding to the DC noise is added to the noise components of the linear sum R of the correlation matrices, so not only jitter noise (fluctuation of the transition point), which is a transition noise in perpendicular recording, and T50 fluctuation noise (fluctuation of inclination of the transition point), but also DC noise can be separated out and detected. Further, a linear separation equation is used, therefore accuracy is high, and DC noise can be detected separately from other kinds of noise.

The correlation matrices for jitter noise and T50 noise are taken independently for each polarity at the rise of the edge, and the correlation matrix for DC noise is taken independently for polarities N and S, so asymmetrical noise can be detected.

Fig. 8 is a graph of a simulation result to describe the dependency of the error rate on SNR (S/N ratio) when each noise component in perpendicular recording is 100% (in other words, assuming that each noise component respectively is responsible for all the noise).

Bit error rate is measured by simulation while changing the SNR of a solitary wave, when each noise component, that is, white noise, jitter noise, T50 fluctuation noise and DC noise, are 100% at each SNR, and the result is shown in Fig. 8 where the abscissa is the SNR (dB), and the ordinate is the bit error rate (log notation).

As Fig. 8 shows, even if the SNR is the same, the error rate is different depending on the noise component. For example, in the comparison of the 100% jitter noise, 100% T50 fluctuation noise and 100% DC noise, when SNR = 20 dB, the error rate is best (lowest) in the sequence of DC noise, jitter noise and T50 fluctuation noise. The difference of the error rate between the DC noise and the T50 noise is about 2.5 digits.

This means that it is difficult to optimize the error rate by the evaluation of the SNR alone, but in the present invention, however, the DC noise, which could not be separated in prior art, is separated, so each component can be separated, and the error rate can be evaluated by the power of the noise components. In other words, by measuring the power of the noise component, the direction of improving the error rate (which noise component should be suppressed) can be judged.

Moreover, even if the error rate is not measured, the quality of the perpendicular recording medium can be evaluated. For example, it can be judged that when the DC noise power is high and T50 noise power is low, then the error rate is low, and when the opposite, then the error rate is high.

Additionally, in the development of a perpendicular recording medium, guidelines on noise components, which should be decreased in order to decrease the error rate, can be provided based on the measurement of power of jitter noise, T50 fluctuation noise and DC noise. Thus the present invention can contribute to the improvement of layer thickness, material selection and layer configuration of the medium.

Visualization processing of medium noise basic matrix

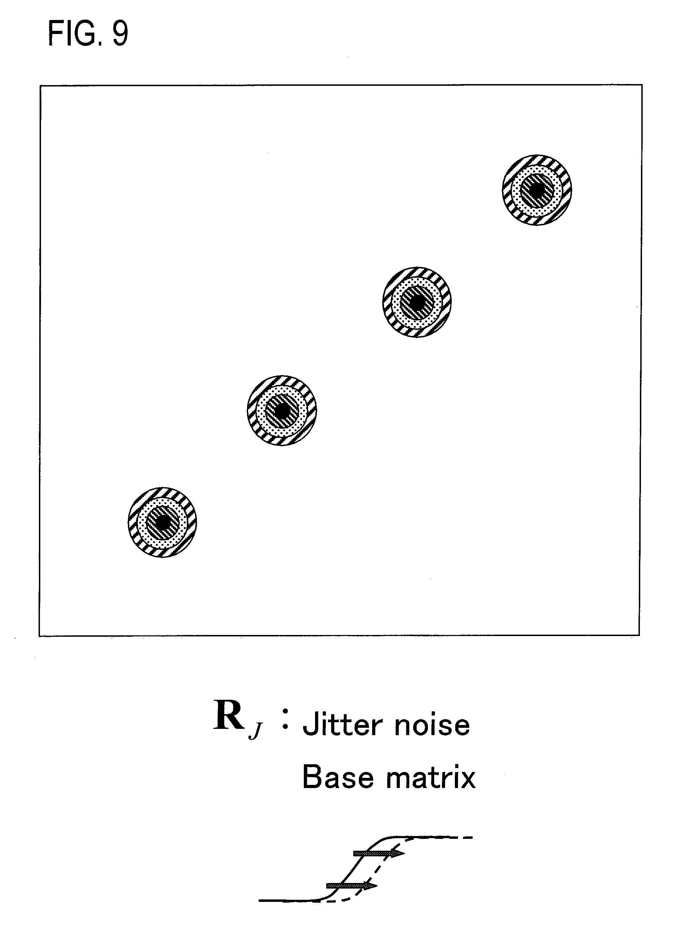

A method for simplifying the analysis of each measured medium noise component will now be described. Fig. 9 to Fig. 12 are diagrams depicting the visualization (display to a user) of base matrices of each noise component. On the display device 24, the CPU 20 displays the calculated noise power of each noise component on the orthogonal coordinate system, of which abscissa and ordinate indicate the base matrices, with the time axis in the diagonal direction.

Fig. 9 is a diagram depicting the visual display screen (screen display) of the base matrices of the jitter noise, and the intensity of noise power (level of jitter) is shown by the diagonal time axis direction. Actually the intensity is displayed in color, but is indicated as contour lines here for simplification, and the noise power is higher as the contour line becomes higher (highlight in black portion in Fig. 9).

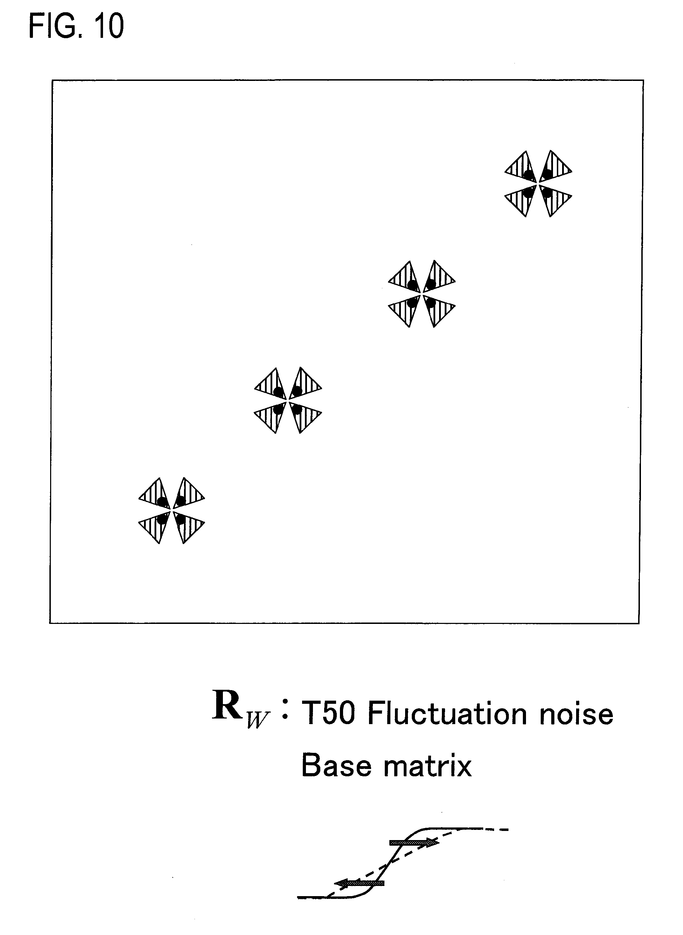

In the same way, Fig. 10 is a diagram depicting a visual display screen of the base matrix of the T50 fluctuation noise, and the intensity of noise power (fluctuation width) is displayed in the diagonal time axis direction. Actually the intensity is displayed in color, but is indicated here as diagonal lines and black portions for simplification, and the absolute value of the fluctuation width is highest in the black portion, and the direction of the diagonal element is a positive polarity, and the adjacent portion to that is negative polarity, and positive and negative are disposed alternately.

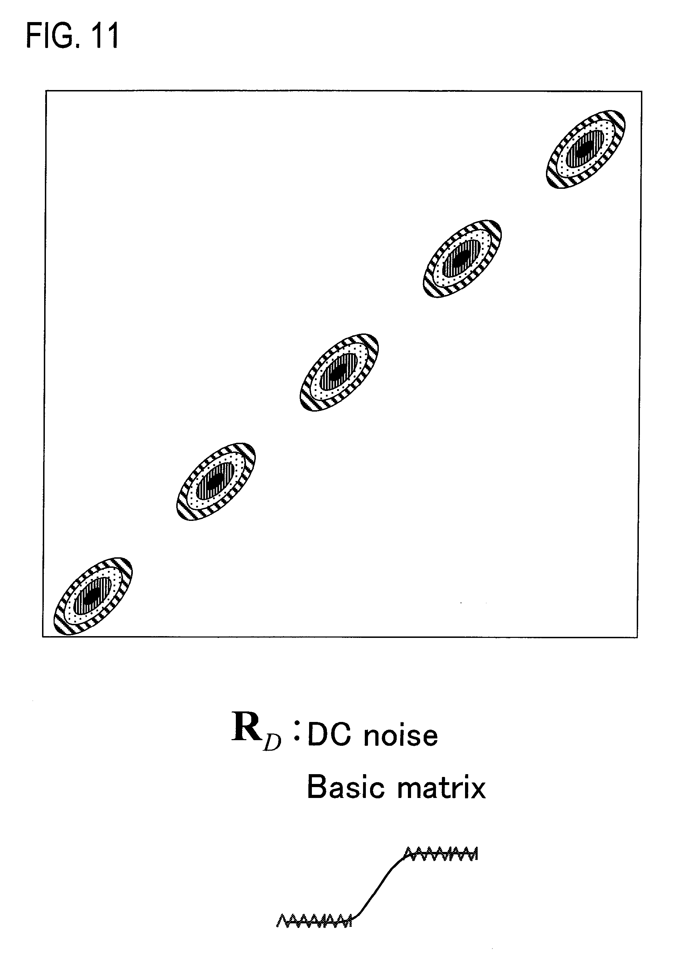

Fig. 11 is a diagram depicting a visual display screen of the base matrix of the DC noise, and the intensity of noise power is shown in the diagonal time axis direction. Actually the intensity is displayed in color, but is indicated here as contour lines for simplification, and the noise power (intensity of the DC noise) is higher as the contour line becomes higher (highest in black portion in Fig. 11).

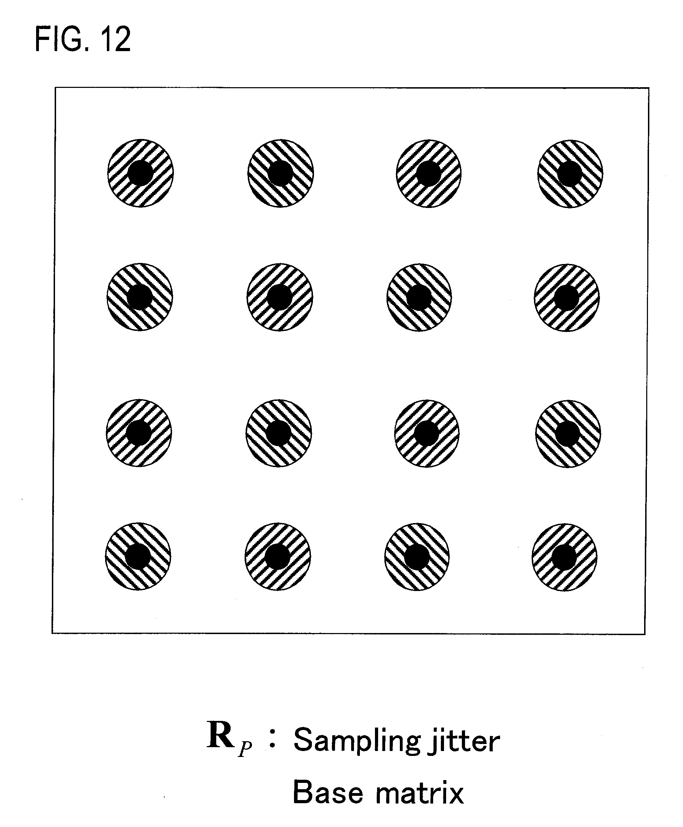

Fig. 12 is a diagram depicting a visual display screen of the base matrix of the sampling noise, and the intensity of noise power is shown in the diagonal time axis direction. Actually the intensity is displayed in color, but is indicated here as contour lines for simplification, and the absolute value of the noise power becomes higher as the contour line becomes higher (highest in black portion in Fig. 12), and the direction of a diagonal element is positive polarity, and the direction perpendicular to this direction is negative polarity.

In the above mentioned correlation matrices, each measured noise power is visualized and displayed in parallel on the display device 24. By this, the intensity of each noise component of the medium noise can be easily identified, which is effective for the above mentioned medium evaluation and inspection.

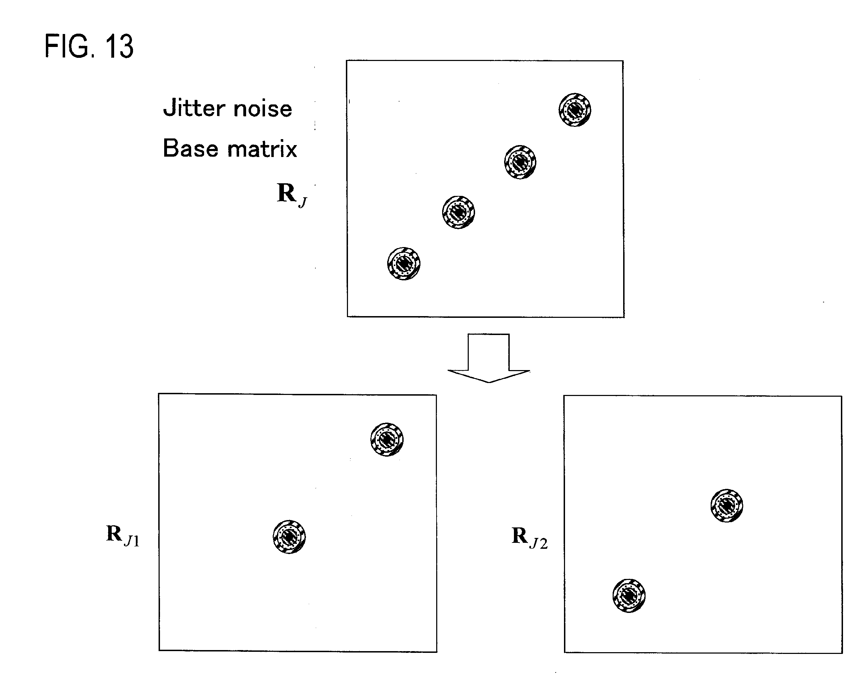

Fig. 13 to Fig. 15 are diagrams depicting other embodiments of the visualization of the base matrices of each noise component of the present invention. On the display device 24, the CPU 20 displays the calculated noise power of each noise component on the orthogonal coordinate system, of which abscissa and ordinate indicate the base matrices, with the time axis in the diagonal direction, as mentioned above.

As mentioned above, axes of the correlation matrix for jitter noise and T50 noise is taken independently for each polarity at the rise of the edge and the axes of the correlation matrix for DC noise is taken independently for polarities N and S, and these are distinctively displayed. Therefore asymmetric noise can be easily identified.

Fig. 13 is a diagram depicting a visual display screen of the base matrix of jitter noise, and the intensity of the noise power (level of jitter) is displayed in the diagonal time axis direction independently for the base matrix of jitter noise Rj1 (transition from S pole to N pole) and Rj2 (transition from S pole to N pole). Actually the intensity is displayed in color, but is indicated here as contour lines for simplification, and the noise power is higher as the contour line becomes higher (highest in the black portion in Fig. 13).

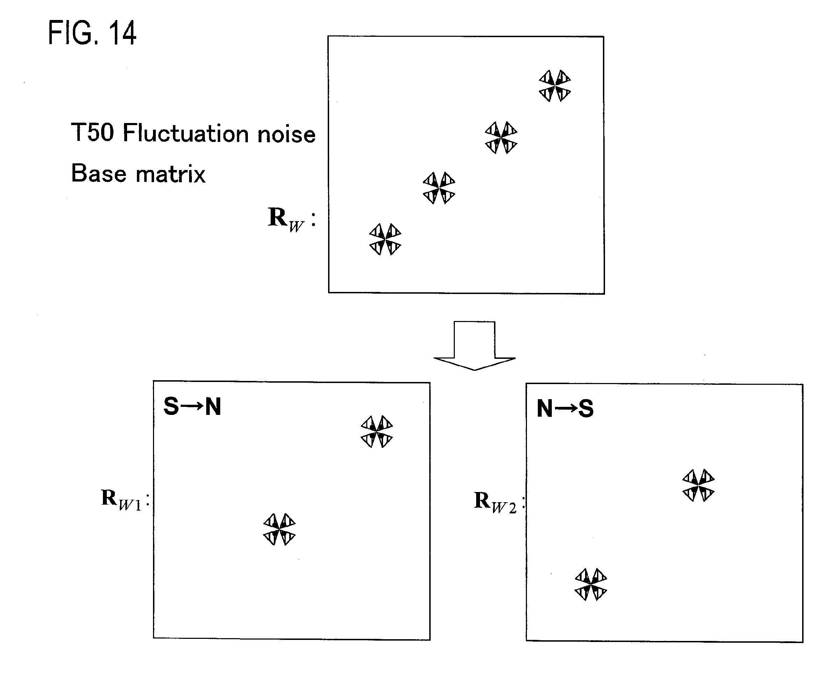

In the same way, Fig. 14 is a diagram depicting a visual display screen of the base matrix of T50 fluctuation noise, and the intensity of the noise power (fluctuation width) is displayed in the diagonal time axis direction independently for the base matrix of T50 noise Rw1 (transition from S pole to N pole) and Rw2 (transition from S pole to N pole). Actually the intensity is displayed in color, but is indicated here as diagonal lines and black portions for simplification, and the absolute value of the fluctuation width is highest in the black portion, and the direction of the diagonal element is a positive polarity, and the direction perpendicular to this direction is a negative polarity.

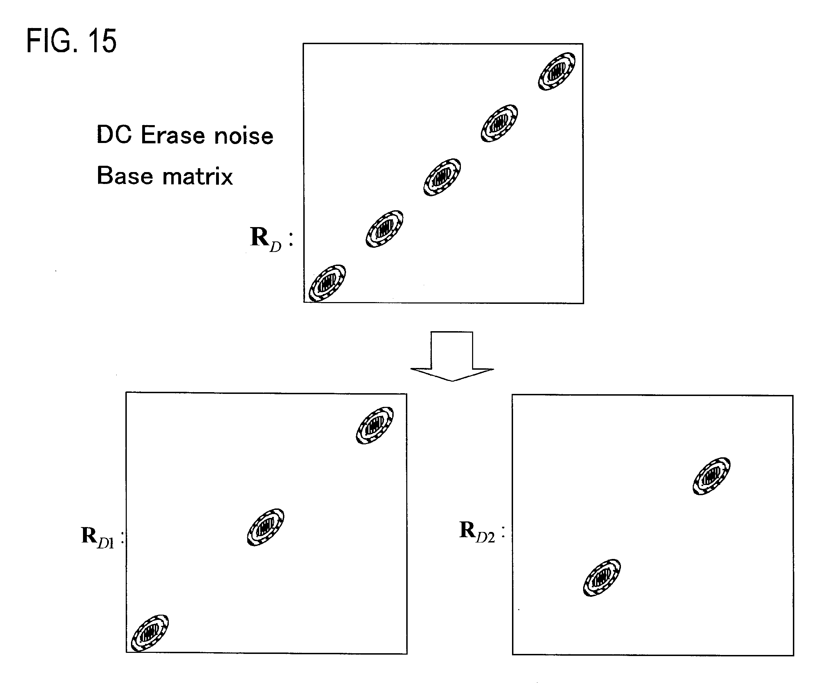

Fig. 15 is a diagram depicting a visual display screen of the base matrix of DC noise, and the intensity of the noise power is displayed in the diagonal time axis direction independently for the base matrix of the DC noise RD1 (N pole) and RD2 (S pole). Actually the intensity is displayed in color, but is indicated here as contour lines for simplification, and the noise power (intensity of DC noise) is higher as the control line becomes higher (highest in the black portion in Fig. 15).

By displaying each noise power corresponding to the recording direction of the perpendicular recording, the intensity of each noise component of the medium noise can be easily identified, and asymmetric noise can be easily identified by visualization, which is effective for medium evaluation and inspection.

Other embodiments

In the above embodiments, the inspection of the medium noise was described using an example of evaluating and analyzing the performance of the perpendicular recording medium, but can also be applied to the performance inspection of manufactured perpendicular recording media. The perpendicular recording medium was described using an example of a perpendicular magnetic disk, but can also be applied to storage media other than a disk, such as tape.

The present invention was described using embodiments, but the present invention can be modified in various ways within the scope of the spirit thereof, and these variant forms shall not be excluded from the scope of the present invention.

Not only jitter noise, which depends on the transition point of magnetization and T50 noise, but also DC noise, which is added to a DC component, due to the fact that the reproducing waveform of the perpendicular magnetic recording method is a rectangular wave, can be separated from the medium noise of the perpendicular magnetic recording medium by correlation matrices, and the noise power thereof can be detected, therefore the performance of the perpendicular magnetic recording medium can be accurately evaluated. Hence the present invention can contribute to decreasing the error rate of the perpendicular magnetic recording medium.

The present invention may be implemented partly or wholly in the form of software executed by a general-purpose processor of a computer. Such software may be recorded on a storage medium or downloaded from a network such as the Internet.

**Claims**

1. An inspection method for a perpendicular magnetic recording medium, for inspecting medium noise of the perpendicular magnetic recording medium, comprising:

   a step of reading recording data from the perpendicular magnetic recording medium by a magnetic head and acquiring a reproducing waveform;
   a step of extracting a medium noise component from the reproducing waveform and creating a correlation matrix of the medium noise from the extracted medium noise by a computer;
   a step of calculating first coefficients of a correlation matrix on a magnetization transition noise and a second coefficients of a correlation matrix on a DC noise, using a least square method, based on a noise correlation matrix specified by a linear sum of the correlation matrix on the magnetization transition noise and the correlation matrix on the DC noise, and the extracted medium noise correlation matrix by the computer; and
   a step of calculating a power of the magnetization transition noise component and a power of the DC noise component using the respective first and second coefficients by the computer.

2. The inspection method for a perpendicular magnetic recording medium according to Claim 1, wherein the coefficient calculation step comprises a step of calculating the first coefficients of each polarity of the correction matrix on the magnetization transition noise and the second coefficients of each polarity of the correlation matrix on the DC noise, using a least square method, based on the noise correction matrix specified by the linear sum of the correlation matrix on the magnetization transition noise of each polarity of the perpendicular magnetic recording and the correlation matrix on the DC noise of the each polarity, and the extracted medium noise correlation matrix.

**3.** The inspection method for a perpendicular magnetic recording medium according to Claim 1 or 2, wherein the coefficient calculation step further comprises:

a step of performing partial differentiation calculation for a square expression of a difference between the noise correlation matrix specified by the linear sum of the correlation matrix on the magnetization transition noise and the correlation matrix on the DC noise, and the extracted medium noise correlation matrix, with the coefficient of the correlation matrix on the magnetization transition noise and the coefficient of the correlation matrix on the DC noise respectively; and
a step of calculating the first coefficient of the correlation matrix on the magnetization transition noise and the second coefficient of the correlation matrix on the DC noise using an equation acquired in the partial differentiation calculation.

**4.** The inspection method for a perpendicular magnetic recording medium according to Claim 1, 2, or 3, wherein the coefficient calculation step further comprises a step of calculating respective first and second coefficients of the correlation matrix on the magnetization transition noise and the correlation matrix on the DC noise, using a least square method, based on a noise correlation matrix specified by a linear sum of a base matrix on the magnetization transition noise and a base matrix on the DC noise, and the extracted medium noise correlation matrix.

**5.** The inspection method for a perpendicular magnetic recording medium according to Claim 4, wherein the power calculation step comprises a step of calculating a power of the magnetization transition noise component and a power of the DC noise component respectively using the coefficient of the correlation matrix on the magnetization transition noise, the coefficient of the correlation matrix on the DC noise, and a diagonal element of the base matrix.

**6.** The inspection method for a perpendicular magnetic recording medium according to Claim 1, further comprising a step of outputting the calculated power of the noise component to a visual device, as a diagonal element of the base matrix on orthogonal coordinates.

**7.** The inspection method for a perpendicular magnetic recording medium according to any preceding claim, wherein the correlation matrix on the magnetization transition noise comprises:

a correlation matrix of jitter noise on the fluctuation of the magnetization transition point; and
a correlation matrix of T50 noise on the fluctuation of the inclination of the magnetization transition point.

**8.** The inspection method for a perpendicular magnetic recording medium according to any preceding claim, wherein the step of creating a correlation matrix of the medium noise comprises:

a step of calculating an average waveform of the reproducing waveforms of a plurality of blocks; and
a step of creating a correlation matrix of the medium noise by subtracting the average waveform from the reproducing waveform and extracting the medium noise component.

**9.** The inspection method for a perpendicular magnetic recording medium according to any preceding claim, wherein the step of acquiring a reproducing waveform comprises:

a step of writing recording data of a plurality of blocks to the perpendicular magnetic recording medium by the magnetic head; and
a step of reading the recording data from the perpendicular magnetic recording medium by the magnetic head after the writing, and acquiring a reproducing waveform.

**10.** The inspection method for a perpendicular magnetic recording medium according to any preceding claim, wherein the step of acquiring a reproducing waveform further comprises a step of reading the recording data from the rotating perpendicular magnetic recording medium by the magnetic head, and acquiring a reproducing waveform.

**11.** An inspection device for a perpendicular magnetic recording medium, for inspecting medium noise of a perpendicular magnetic recording medium, comprising:

a magnetic head, which reads recording data from the perpendicular magnetic recording medium and acquires a reproducing waveform; and
a computer, which extracts a medium noise component from the reproducing waveform and calculates a component of the medium noise,

wherein the computer creates a correlation matrix of the medium noise from the extracted medium noise, calculates a first coefficients of a correlation matrix on a magnetization transition noise and a second coefficients of a correlation matrix on a DC noise, using a least square method, based on a noise correlation matrix specified by a linear sum of the correlation matrix on the magnetization transition noise and the correlation matrix on the DC noise, and the extracted medium noise correlation matrix, and calculates a power of the magnetization transition noise component and a power of the DC noise component using the respective first and second coefficients.

**12.** The inspection device for a perpendicular magnetic recording medium according to Claim 11, wherein the computer calculates the first coefficients of each polarity of the correlation matrix on the magnetization transition noise and the second coefficients of the correlation matrix on the DC noise, using a least square method, based on the noise correlation matrix specified by the linear sum of the correlation matrix on the magnetization transition noise of each polarity of the perpendicular magnetic recording and the correlation matrix on the DC noise of the each polarity, and the extracted medium noise correlation matrix.

**13.** The inspection device for a perpendicular magnetic recording medium according to Claim 11 or 12, wherein the computer performs partial differentiation calculation for a square expression of a difference between the noise correlation matrix specified by the linear sum of the correlation matrix on the magnetization transition noise and the correlation matrix on the DC noise, and the extracted medium noise correlation matrix, with the coefficient of the correlation matrix on the magnetization transition noise and the coefficient of the correlation matrix on the DC noise respectively, and calculates the first coefficient of the correlation matrix on the magnetization transition noise and the second coefficient of the correlation matrix on the DC noise using an equation acquired in the partial differentiation calculation.

**14.** The inspection device for a perpendicular magnetic recording medium according to Claim 11, 12 or 13, wherein the computer calculates respective first and second coefficients of the correlation matrix on the magnetization transition noise and the correlation matrix on the DC noise, using a least square method, based on a noise correlation matrix specified by a linear sum of a base matrix on the magnetization transition noise and a base matrix on the DC noise, and the extracted medium noise correlation matrix.

**15.** The inspection device for a perpendicular magnetic recording medium according to Claim 14, wherein the computer calculates a power of the magnetization transition noise component and a power of the DC noise component respectively using the coefficient of the correlation matrix on the magnetization transition noise, the coefficient of the correlation matrix on the DC noise, and a diagonal element of the base matrix.

**16.** The inspection device for a perpendicular magnetic recording medium according to any of Claims 11 to 15, further comprising an output device which visually outputs the calculated power of the noise component as a diagonal element of the base matrix on orthogonal coordinates.

**17.** The inspection device for a perpendicular magnetic recording medium according to any of Claims 11 to 16, wherein the correlation matrix on the magnetization transition noise comprises:

a correlation matrix of jitter noise on the fluctuation of the magnetization transition point; and
a correlation matrix of the T50 noise on the fluctuation of the inclination of the magnetization transition point.

**18.** The inspection device for a perpendicular magnetic recording medium according to any of Claims 11 to 17, wherein the computer creates a correlation matrix of the medium noise by calculating an average waveform of the reproducing waveforms of a plurality of blocks, subtracting the average waveform from the reproducing waveform, and extracting the medium noise component.

**19.** The inspection device for a perpendicular magnetic recording medium according to any of Claims 11 to 18,

wherein the computer writes recording data of a plurality of blocks to the perpendicular magnetic recording medium by the magnetic head, reads the recording data from the perpendicular magnetic recording medium by the magnetic head after the writing, and acquires a reproducing waveform.

20. The inspection device for a perpendicular magnetic recording medium according to any of Claims 11 to 19, wherein the magnetic head reads the recording data from the rotating perpendicular magnetic recording medium, and acquires a reproducing waveform.

FIG. 1

FIG. 2

FIG. 3

Magnetization transition

86-1 Magnetic particle

Track width direction

86 Medium recording layer

# FIG. 4

Perpendicular recording

Recording data    0 1 0 0 0 1 0 1 0

Reproducing waveform

Jitter noise ⇒ Jitter noise

T50 noise ⇒ T50 noise

DC noise

# FIG. 5

Start

S10

Record N number of arbitrary data which has length of P samples

S12  Read write data (P × N) for a plurality of times

S14

Take an average of read results (by this, white noise is removed)

S16  Taken an average of N blocks

S18

Subtract average waveform (result of S16) from reproducing waveform of each block

S20  Create a matrix of data string of medium noise

$$X: \ P \times N \ \text{matrix}$$

S22  Find noise correlation matrix $\mathbf{R} = \dfrac{1}{N} \mathbf{X} \cdot \mathbf{X}^{T}$

S24

Separate each noise component using least square method

# FIG. 6

Write data

P sample

N blocks

S12

R1

R2

R3

Ave

S14

AvR

S16

Average

S18

MWS

EP 1 944 767 A2

EP 1 944 767 A2

# FIG. 7

S30

Represent noise correlation matrix with linear sum of each noise base matrix $\mathbf{R} = a_{J1}\mathbf{R}_{J1} + a_{J2}\mathbf{R}_{J2} + a_{W1}\mathbf{R}_{W1} + a_{W2}\mathbf{R}_{W2} + a_{D1}\mathbf{R}_{D1} + a_{D2}\mathbf{R}_{D2} + a_{P}\mathbf{R}_{P}$

S32

To estimate $a_{J1}, a_{J2}, a_{W1}, a_{W2}, a_{D1}, a_{D2}, a_P$ , determine conditions to minimize

$$E = \sum_{i,j} \left\{ \mathbf{R}^{ij} - (a_{J1}\mathbf{R}_{J1}^{ij} + a_{J2}\mathbf{R}_{J2}^{ij} + a_{W1}\mathbf{R}_{W1}^{ij} + a_{W2}\mathbf{R}_{W2}^{ij} + a_{D1}\mathbf{R}_{D1}^{ij} + a_{D2}\mathbf{R}_{D2}^{ij} + a_{P}\mathbf{R}_{p}^{ij}) \right\}^2$$

S34

Calculate the power of each noise component by using each coefficient and diagonal element of each noise component base matrix

$$\sigma_{J1}^2 = a_{J1}\sum_i \mathbf{R}_{J1}(i, i) \qquad \sigma_{W1}^2 = a_{W1}\sum_i \mathbf{R}_{W1}(i, i) \qquad \sigma_{D1}^2 = a_{D1}\sum_i \mathbf{R}_{D1}(i, i) \qquad \sigma_{p}^2 = a_{p}\sum_i \mathbf{R}_{p}(i, i)$$

$$\sigma_{J2}^2 = a_{J2}\sum_i \mathbf{R}_{J2}(i, i) \qquad \sigma_{W2}^2 = a_{W2}\sum_i \mathbf{R}_{W2}(i, i) \qquad \sigma_{D2}^2 = a_{D2}\sum_i \mathbf{R}_{D2}(i, i)$$

FIG. 8

EP 1 944 767 A2

FIG. 9

**R**$_J$ : Jitter noise

Base matrix

FIG. 10

$\mathbf{R}_W$ : T50 Fluctuation noise

Base matrix

## FIG. 11

$\mathbf{R}_D$ : DC noise

Basic matrix

FIG. 12

$\mathbf{R}_P$ : Sampling jitter

Base matrix

FIG. 13

Jitter noise
Base matrix

$\mathbf{R}_J$

$\mathbf{R}_{J1}$

$\mathbf{R}_{J2}$

EP 1 944 767 A2

## FIG. 14

T50 Fluctuation noise
Base matrix

$\mathbf{R}_W$ :

S→N

$\mathbf{R}_{W1}$ :

N→S

$\mathbf{R}_{W2}$ :

EP 1 944 767 A2

FIG. 15

DC Erase noise
Base matrix

$\mathbf{R}_D :$

$\mathbf{R}_{D1} :$

$\mathbf{R}_{D2} :$

EP 1 944 767 A2

# FIG. 16

## PRIOR ART

0 1 0 0 0 1 0 1 0

Jitter noise

Jitter noise

T50 noise

T50 noise

FIG. 17

# PRIOR ART

Reproducing output

Reproducing waveform

Ideal transition point

Fluctuation of transition position ➡ Jitter noise

T50

Fluctuation of transition width ➡ T50 Fluctuation noise

1
0.5
0
−0.5
−1

FIG. 18

PRIOR ART

S100

Create correlation matrix $\quad \mathbf{R} = \dfrac{1}{N}\mathbf{X} \cdot \mathbf{X}^{T} \quad \mathbf{X} \quad (P \times N)$

of medium noise from actual waveform

S102

Specify noise model: Correlation matrix of jitter noise is $\mathbf{R}_J$

Correlation matrix of T50

fluctuation noise is $\mathbf{R}_W$

Linear separation expression: $\mathbf{R} = a_J\mathbf{R}_J + a_W\mathbf{R}_W$ is assumed

Decide each coefficient ($a_J, a_W$) by least square method

S104

Calculate noise power based on each coefficient

$$\sigma_J^2 = a_J \sum_i \mathbf{R}_J \,(i,\,i)$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007004566 A

### Non-patent literature cited in the description

- Medium noise mode analysis in perpendicular magnetic recording method. **KEN NAKAGAWA.** Technical Report of IEICE, MR 2002-61. IEICE, December 2002